# EUROPÄISCHE PATENTANMELDUNG

(11) **EP 1 101 543 A1**
(43) Veröffentlichungstag der Anmeldung: **23.05.2001**
(21) Anmeldenummer: 00125057.0
(22) Anmeldetag: 17.11.2000
(51) Int. Cl.: B08B 9/02, A23G 9/30, A47J 43/12

(54) **Vorrichtung zum Reinigen eines Sahneautomaten**

(30) Priorität: 19.11.1999 DE 29920423 U
(71) Anmelder: Firma Vaihinger GmbH, 65520 Bad Camberg (DE)
(72) Erfinder: Hornisch, Udo, 65520 Bad Camberg (DE); Hofmann, Andreas, 65520 Bad Camberg (DE); Datum, Volker, 65220 Bad Camberg (DE)
(74) Vertreter: Schieferdecker, Lutz, Dipl.-Ing.

(57) **Zusammenfassung**

Die Erfindung betrifft eine Vorrichtung zum Reinigen von wesentlichen Teilen eines Sahneautomaten (2) der eine Sahnepumpe und eine Luftregulierungseinheit (8) mit einer Anschlußöffnung zur lösbaren Befestigung einer Sahneleitung umfaßt, die zu einem Rohsahne enthaltenden Behälter führt, sowie mit mindestens einer Schlageinrichtung (13) und einer Sahneabgabeeinrichtung (14).

Der Kern der Erfindung besteht darin, daß folgende Komponenten vorgesehen sind:
a) eine Förderpumpe für Wasser (4) und eine Einrichtung zum Zuführen eines Reinigungsmittels (6) in das Wasser,
b)eine lösbare Verbindungsleitung (19) zwischen der Förderpumpe und der Sahnepumpe bzw. ihrer Luftregulierungseinheit und
c) eine an elektrische Bauteile des Sahneautomaten (2) anschließare elektrische Steuereinrichtung mindestens für die Förderpumpe und für mindestens ein elektrisch steuerbares Ventil

## Beschreibung

Die Erfindung betrifft eine Vorrichtung zum Reinigen von wesentlichen Teilen eines Sahneautomaten, der gemäß Oberbegriff von Anspruch 1 eine Vielzahl unterschiedlicher Komponenten umfaßt.

An die regelmäßige Reinigung von Sahneautomaten werden aus gesundheitlichen und hygienischen Gründen sehr hohe Anforderungen gestellt. Die Hersteller von Sahneautomaten geben daher dem Benutzer nicht nur Empfehlungen, sondern stellen ihm detaillierte Bedienungsanleitungen zur Verfügung, an die sich der Benutzer streng halten soll. Dennoch ist nicht sichergestellt, dass der Benutzer die Reinigung genaustens nach der Bedienungsanleitung vornimmt.

Der Erfindung liegt daher die Aufgabe zugrunde, Maßnahmen vorzusehen, mit deren Hilfe in wesentlich höheren Maße als bisher gewährleistet werden kann, dass die geforderte, tägliche Reinigung eines Sahneautomaten auch tatsächlich im erforderlichen Umfang erfolgt.

Zur Lösung dieser Aufgabe sieht die Erfindung mit den Merkmalen des kennzeichnenden Teiles von Anspruch 1 vor, dass eine Förderpumpe für Wasser und eine Einrichtung zum Zuführen eines Reinigungsmittels in das Wasser, eine lösbare Verbindungsleitung zwischen der Förderpumpe und der Sahnepumpe bzw. ihrer Luftregulierungs-Einheit, eine zugleich an elektrisch/elektronische Bauteile des Sahneautomaten ansschließbare elektrische Steuereinrichtung mindestens für die Förderpumpe und für mindestens ein elektrisch steuerbares Ventil sowie eine zur Erhöhung des inneren Widerstandes der zu reinigenden Teile des Sahneautomaten dienende Düse am freien Ende der Sahne-Abgabe-Einrichtung vorgesehen sind.

Mit Hilfe der besagten Komponenten ist es möglich, beliebige Reinigungsprogramme durchzuführen. Auf eine Vorreinigung mit klarem Wasser können ein Hauptreinigungsgang mit Wasser und Reinigungs-bzw. Desinfektionsmittel sowie eine Nachreinigung mit klarem Wasser folgen. Aber auch andere Kombinationen der Reinigung sowie unterschiedliche Wassermengen, unterschiedliche Wassertemperaturen und Zusätze von Reinigungs-bzw. Desinfektionsmittel sind möglich.

Sofern der Sahneautomat eine Sahnepumpe für die Rohsahne und stirnseitig eine Luftregulierungs-Einheit mit einer Anschlußöffnung zur lösbaren Befestigung der Leitung für die Rohsahne umfaßt, ist es zweckmäßig, zum Reinigen die Leitung für die Rohsahne an der Luftregulierungs-Einheit zu lösen und an dieser Stelle die Verbindungsleitung für die Spül-und Reinigungs- bzw. Desinfektionsflüssigkeit anzuschließen. Die Spül- und Reinigungsvorgänge können dann programmgesteuert ablaufen, wobei dies unter Beibehaltung der üblichen Garniertülle an der Sahne-Abgabe-Einrichtung geschieht oder unter Verwendung der Düse zur Erhöhung des inneren Widerstandes der zu reinigenden Teile des Sahneautomaten.

Weitere Merkmale der Erfindung gehen aus Unteransprüchen hervor.

Die Erfindung wird nachstehend anhand von Ausführungsbeispielen, die in der Zeichnung dargestellt sind, näher beschrieben. Dabei zeigen:
Figur 1 eine perspektivische Ansicht eines Sahneautomaten und der Vorrichtung sowie weiterer Teile;

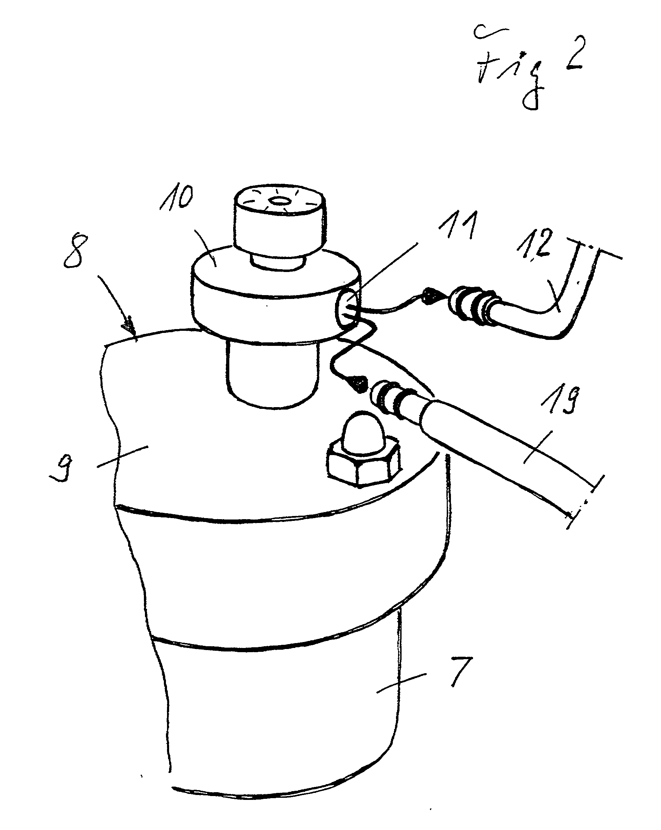

Figur 2 in größeren Maßstab sowie abgeschnitten eine perspektivische Ansicht der Sahnepumpe und der Luftregulieungseinheit mit der wahlweise anschließbaren Sahneleitung und der Verbindungsleitung für die Spül-und Reinigungsflüssigkeiten;
Figur 3 ein Blockschaltbild eines ersten Ausführungsbeispieles der Vorrichtung und
Figur 4 ein Blockschaltbild einer abgewandelten Ausführungsform.

Eine Vorrichtung 1 zum Reinigen von wesentlichen Teilen eines Sahneautomaten 2 umfaßt eine Förderpumpe 3 für Wasser 4 und eine Einrichtung 5 zum Zuführen eines Reinigungs-/oder Desinfektionsmittels 6 in das Wasser 4.

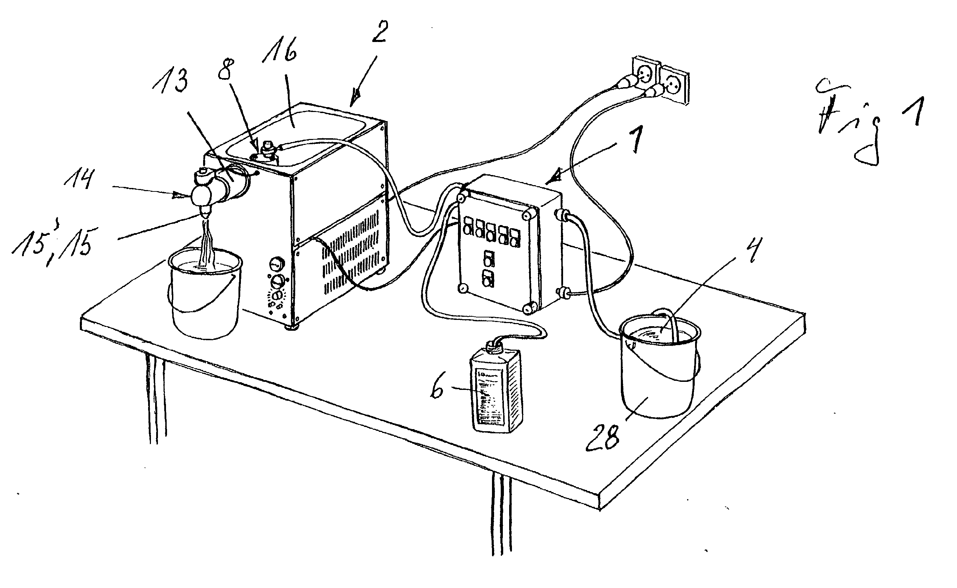

Bei den zu reinigenden Teilen des Sahneautomaten 2 handelt es sich um eine Sahnepumpe 7, eine Luftregulierungs-Einheit 8 mit Ventilkopf 9 und Luftregulierungsgehäuse 10 mit einer Anschlußöffnung 11 zur lösbaren Befestigung einer Sahneleitung 12. Die Sahneleitung 12 führt zu einem in den Figuren nicht dargestellten, Rohsahne enthaltenden Behälter. Ferner gehören zu den zu reinigenden Teilen auch eine Schlageinrichtung 13 und eine Sahneabgabeeinrichtung 14, an deren freien Ende sich überlicherweise eine Garniertülle 15 befindet. Figur 1 zeigt den Sahneautomaten 2 nach Abnahme eines Deckels sowie nach Entnahme des Behälters für die Rohsahne. Dieser befindet sich zusammen mit der Luftregulierungseinheit 8 in einer Wanne 16 und ist bei normalem Betrieb über die Sahneleitung 12 mit dem nicht dargestellten Rohsahne-Behälter verbunden.

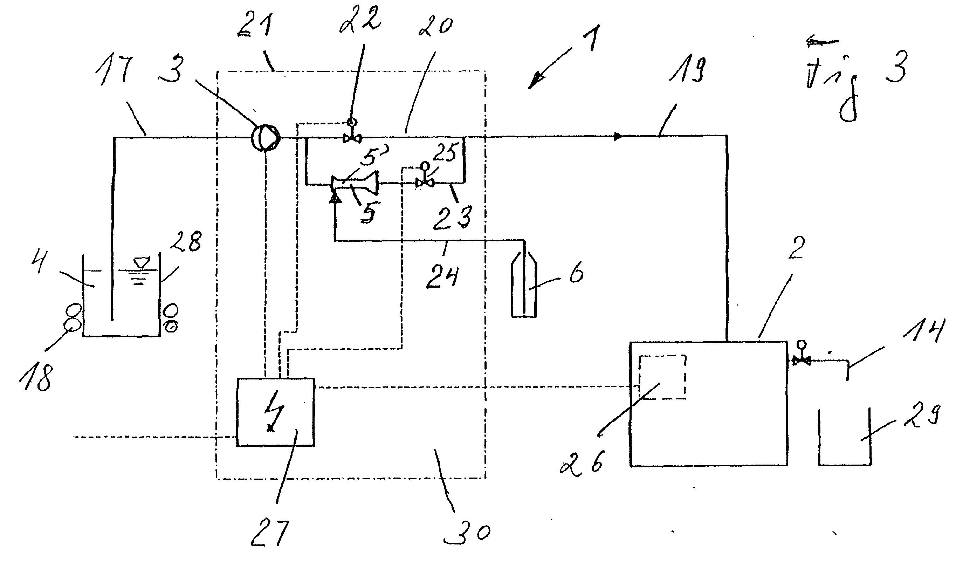

Wie ferner das Blockschaltbild gemäß Figur 3 zeigt, ist eine zur Förderpumpe 3 führende Leitung 17 für Wasser vorgesehen. Dieses Wasser ist klares und gegebenenfalls mit einer Heizeinrichtung 18 temperiertes Wasser 4.

Von der Förderpumpe 3 führt eine Verbindungsleitung 19 zum Sahneautomaten 2. Ein Stück 20 dieser Verbindungsleitung 19 befindet sich ebenso wie die Förderpumpe 3 im Inneren eines Gehäuses 21. Dort weist die Verbindungsleitung 19 auch ein elektrisch steuerbares Ventil 22 auf.

In einer Bypasss-Leitung 23 zu dem elektrisch steuerbaren Ventil 22 befindet sich die Einrichtung 5 zum Zuführen des Reinigungs-/oder Desinfektionsmittels in das Wasser 4. Gemäß dem in den Figuren dargestellten Ausführungsbeispiel handelt es sich bei der Einrichtung 5 um einen Injektor 5'.

Der in der das steuerbare Ventil 22 überbrückenden Bypass-Leitung 23 angeordnete Injektor 5' wird ferner über eine Leitung 24 mit dem Reinigungs-/oder Desinfektionsmittel 6 versorgt.

In der Bypass-Leitung 23 befindet sich in Strömungsrichtung hinter dem Injektor 5' noch ein ebenfalls elektrisch steuerbares Ventil 25, das ebenso wie das andere Ventil 22 und die Förderpumpe 3 von einer zugleich an die elektrischen Bauteile 26 des Sahneautomaten 2 angeschlossenen, elektrischen Steuereinrichtung 27 gesteuert wird.

Bei geschlossenem Ventil 25 in der Bypass-Leitung 23 strömt Wasser 4 mit Hilfe der Pumpe 3 z. B. aus einem Behälter 28 durch die Verbindungssleitung 19 und die Anschlußöffnung 11 im Luftregulierungsgehäuse 10 durch die Luftregulierungseinheit 8 und die Pumpe 7 zur Schlageinrichtung 13 und tritt an der Garniertülle 15 aus. Das austretende Schmutzwasser kann von einem Eimer 29 aufgefangen werden. Es handelt sich hierbei zunächst um eine Vorreinigung, wobei auch die Sahnepumpe 7 des Sahneautomaten 2 mitläuft.

Sobald für die Hauptreinigung auch Reinigungs-/oder Desinfektionsmittel 6 dem Wasser 4 beigegeben werden soll, wird das Ventil 22 geschlossen und das Ventil 25 in der Bypass-Leitung 23 geöffnet. Nunmehr strömt das Wasser 4 von der Förderpumpe 3 durch die Bypass-Leitung 23 und dabei auch durch den Injektor 5' für das Reinigungs-/oder Desinfektionsmittel 6. Die bereits oben genannten Teile des Sahneautomaten 2 werden jetzt mit Wasser und Reinigungs/oder Desinfektionsmittel 6 gereinigt. Auch hier tritt das mit Sahneresten verunreinigte Wasser aus der Sahne-Abgabe-Einrichtung 14 aus und fließt in den Eimer 29. Zweckmäßigerweise wird allerdings nunmehr die Garniertülle 15 durch eine Düse 15' ersetzt, um den Strömungswiderstand für die Reinigungsflüssigkeit vor dem Austritt aus dem Sahneautomaten 2 zuerhöhen.

Ebenso wie die Förderpumpe 3 und das Stück 20 der Verbindungsleitung 19 und die Bypass-Leitung 23 mit dem Injektor 5' befinden sich auch ein Stück der die Reinigungsflüssigkeit 6 führenden Leitung 24 und die elektrische Steuereinrichtung 27 im Inneren 30 des Gehäuses 21 (Figur 3).

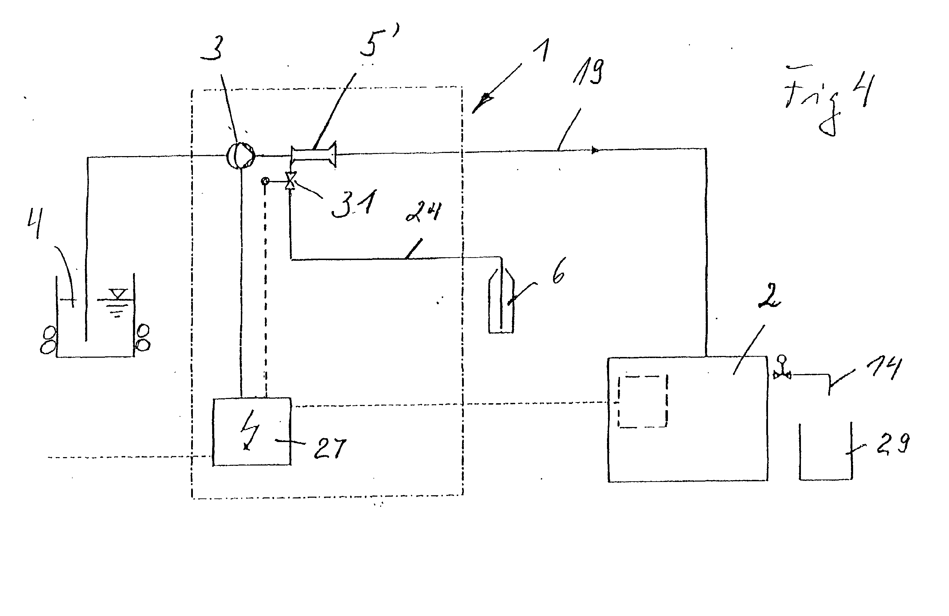

Das in Figur 4 dargestellte Ausführungsbeispiel unterscheidet sich von der Ausführungsform gemäß Figur 3 nur dadurch, dass der Injektor 5' unmittelbar hinter der Pumpe 3 in der Verbindungsleitung 19 angeordnet ist. Die zu dem Injektor 5' führende Leitung 24 für Reinigungs-/oder Desinfektionsmittel weist unmittelbar vor dem Injektor 5 ein elektrisch steuerbares Ventil 31 auf. Dieses Ventil 31 ist in dem kürzest möglichen Abstand vom Injektor 5' angeordnet.

Zum Vorreinigen und Klarspülen fließt das Wasser 4 durch die Pumpe 3 zum Injektor 5' und von dort zum Sahneautomaten 2, wobei das Ventil 31 geschlossen ist. Für den Hauptreinigungsvorgang wird das Ventil 31 geöffnet, so dass Reinigungs-/oder Desinfektionsmittel 6 durch den Injektor 5' zugleich in die Verbindungsleitung 19 gelangt und diese somit Reinigungsflüssigkeit führt.

Der Abstand des Ventiles 31 von dem Injektor 5'wird so kurz wie möglich gewählt, damit beim Klarspülen nach Schließen des Ventiles 31 nicht Reinigungs-/oder Desinfektionsmittel aus einer Leitung zwischen dem Ventil 31 und dem Injektor 5' nachtropfen kann. Die Strecke zwischen dem Ventil 31 und dem Injektor 5' muß beim Klarspülen absolut reinigungs-/oder desinfektionsmittelfrei sein.

Das zweite Ausführungsbeispiel zeigt, dass grundsätzlich auch Änderungen und Abwandlungen möglich sind, ohne von dem grundsätzlichen Erfindungsgedanken abzuweichen.

Zu den möglichen Abwandlungen und Ergänzungen gehört auch, daß der für die Reinigung erforderliche Schaltkasten d. h. also die zum Reinigen von wesentlichen Teilen des Sahneautomaten 2 dienende Vorrichtung 1 im Inneren des Sahneautomaten 2 untergebracht ist. Die Form, Größe und Gestalt des Sahneautomaten bzw. seines Gehäuses müssen dann entsprechend angepaßt sein. Dies ist zwar in keiner der Figuren dargestellt, doch als mögliche Variante auch Gegenstand des Schutzes.

## Patentansprüche

1. Vorrichtung zum Reinigen von wesentlichen Teilen eines Sahneautomaten (2), der eine Sahnepumpe (7) und eine Luftregulierungs-einheit (8) mit einer Anschlußöffnung (11) zur lösbaren Befestigung einer Sahne-Leitung (12) umfaßt, die zu einem Rohsahne enthaltenden Behälter führt, sowie mit mindestens einer Schlageinrichtung (13) und einer Sahneabgabeeinrichtung (14), dadurch gekennzeichnet,
dass folgende Komponenten vorgesehen sind:
a) eine Förderpumpe (3) für Wasser (4) und eine Einrichtung (5) zum Zuführen eines Reinigungsmittels (6) in das Wasser (4),
b) eine lösbare Verbindungsleitung (19) zwischen der Förderpumpe (3) und der Sahnepumpe (7) bzw. ihrer Luftregulierungs-Einheit (8) und
c) eine an elektrische Bauteile (26) des Sahneautomaten (2) anschließbare elektrische Steuereinrichtung (27) mindestens für die Förderpumpe (3) und für mindestens ein elektrisch steuerbares Ventil (22,25,21).

2. Vorrichtung nach Anspruch 1 dadurch gekennzeichnet,
dass ein Injektor (5') als Einrichtung (5) zum Zuführen des Reinigungsmittels (6) in das Wasser (4) vorgesehen ist.

3. Vorrichtung nach mindestens einem der vorhergehenden Ansprüche, dadurch gekennzeichnet,
dass ein elektrisch steuerbares Ventil (22) in der Verbindungsleitung (19) zwischen der Förderpumpe (3) und dem Sahneautomaten (2) angeordnet ist.

4. Vorrichtung nach mindestens einem der vorhergehenden Ansprüche, dadurch gekennzeichnet,
dass der Injektor (5') in einer Bypass-Leitung (23) angeordnet ist, die das steuerbare Ventil (22) in der Verbindungsleitung (19) überbrückt.

5. Vorrichtung nach mindestens einem der vorhergehenden Ansprüche, dadurch gekennzeichnet,
dass ein elektrisch steuerbares Ventil (25) in der Bypass-Leitung (23) hinter dem Injektor (5') angeordnet ist.

6. Vorrichtung nach mindestens einem der vorhergehenden Ansprüche, dadurch gekennzeichnet,
dass zur Erhöhung des Strömungswiderstandes im Sahneautomaten (2) eine Düse (15') anstelle einer Garniertülle (15) an der Sahne-Abgabe-Einrichtung (14) angeordnet ist.

7. Vorrichtung nach mindestens einem der vorhergehenden Ansprüche, dadurch gekennzeichnet,
dass die Förderpumpe (3) und ein Stück (20) der Verbindungsleitung (19) sowie die Bypass-Leitung (23) mit dem Injektor (5') und dem Ventil (25) hinter dem Injektor (5') sowie ein Stück (20) einer Reinigungsmittel (6) führenden Leitung (24) und die elektrische Steuereinrichtung (27), die an die elektrischen Bauteile (26) des Sahneautomaten (2) anschließbar ist, im Inneren (30) eines gemeinsamen Gehäuses (21) angeordnet sind.

8. Vorrichtung nach mindestens einem der vorhergehenden Ansprüche, gekennzeichnet,
durch ihre Anordnung bzw. die Anordnung von mindestens wesentlichen Teilen im Inneren des Sahneautomaten (2).
